# EUROPEAN PATENT APPLICATION

(11) **EP 4 550 438 A1**
(43) Date of publication of application: **07.05.2025**
(21) Application number: 22960344.4
(22) Date of filing: 30.09.2022
(51) Int. Cl.: H01M 4/13, H01M 4/36

(54) **ELECTRODE SHEET, BATTERY CELL, BATTERY, AND ELECTRIC DEVICE**

(71) Applicant: Contemporary Amperex Technology (Hong Kong) Limited, Central, Hong Kong (CN)
(72) Inventor: DU, Xianglong, Ningde, Fujian 352100 (CN)
(74) Representative: Gong, Jinping
(86) International application number: PCT/CN2022/123380
(87) International publication number: WO 2024/065726

(57) **Abstract**

The present application provides an electrode plate, a battery cell, a battery, and an electrical apparatus, where the electrode plate comprises: a current collector comprising a tab region, a thinned region, and a non-thinned region, the thinned region being located between the non-thinned region and the tab region; and a film layer arranged on the thinned region and the non-thinned region, where the film layer comprises a first active material arranged on the thinned region and a second active material arranged on the non-thinned region, the thickness of the film layer of the thinned region is smaller than the thickness of the film layer of the non-thinned region, and the specific surface area of the first active material is larger than the specific surface area of the second active material. A lithium plating phenomenon in the thinned region of the electrode plate can be obviously ameliorated, thereby helping to reduce polarization of the electrode plate during battery cycling, and improving cycling performance and service life of the battery.

## Description

### Technical Field

The present application relates to the technical field of batteries, and particularly relates to an electrode plate, a battery cell, a battery, and an electrical apparatus.

### Background

In recent years, secondary batteries, because of having high energy density and recyclable performance, are widely used in many fields, such as energy storage systems, electric tools, electric bicycles, electric vehicles, military equipment, and aerospace. With the continuous development and wide applications of the secondary batteries, higher requirements have been presented for their performance, such as cycling performance and service life.

Therefore, how to improve the cycling performance and service life of the batteries is a technical problem to be urgently solved.

### Summary of the Invention

In view of the above technical problem, an object of the present application is to provide an electrode plate, a battery cell, a battery, and an electrical apparatus, where the electrode plate is provided with different active materials in a thinned region and a non-thinned region, thereby effectively ameliorating the problem that lithium plating tends to occur in the thinned region of the electrode plate during battery cycling, and improving the cycling performance and service life of the battery.

In a first aspect, the present application provides an electrode plate, comprising: a current collector comprising a tab region, a thinned region, and a non-thinned region, the thinned region being located between the non-thinned region and the tab region; and a film layer arranged on the thinned region and the non-thinned region, where the film layer comprises a first active material arranged on the thinned region and a second active material arranged on the non-thinned region, the thickness of the film layer of the thinned region is smaller than the thickness of the film layer of the non-thinned region, and the specific surface area of the first active material is larger than the specific surface area of the second active material.

The electrode plate provided in the present application is provided with a first active material in the thinned region and a second active material in the non-thinned region, where the first active material has a larger specific surface area. Therefore, compared to the second active material, pores in the first active material can absorb more electrolyte solution during the battery cycling, improve ion kinematics in the thinned region, reduce polarization in the thinned region, and effectively ameliorate battery polarization between a thinned region of a positive electrode and a thinned region of a negative electrode of a battery during cycling, thereby solving a problem that lithium plating tends to occur in the thinned region, helping to improve cycling performance of the battery, and extending service life of the battery.

It should be understood that the first active material and the second active material may be active materials of a same type, or may be active materials of different types.

In some examples, the Dᵥ50 of the first active material is greater than the Dᵥ50 of the second active material.

In an example of the present application, the first active material arranged in the thinned region has a larger particle size distribution, so that there are more gaps between particles of the active material arranged in the thinned region, thereby accommodating more electrolyte solution compared to the non-thinned region, helping to enhance electrochemical reaction kinetics in the thinned region, and improving the cycling performance and service life of the battery.

In some examples, the compaction density of the film layer in the thinned region is smaller than the compaction density of the film layer in the non-thinned region.

In an example of the present application, the compaction density of the film layer arranged in the thinned region is smaller than the compaction density of the film layer arranged in the non-thinned region, so that the film layer in the thinned region has a looser structure than the film layer in the non-thinned region, and can accommodate more electrolyte solution, thereby further enhancing the electrochemical reaction kinetics of the thinned region during the battery cycling, and further improving the cycling performance and service life of the battery.

In some examples, the film layer has a thickness of 40 µm-300 µm in the thinned region.

In some examples, the length of the thinned region in a first direction satisfies: 0 mm<w≤15 mm, and the first direction is the width direction of the electrode plate.

In some examples, the electrode plate is a positive electrode plate, the first active material is selected from at least one of nanometer lithium iron phosphate, nanometer lithium manganese phosphate, nanometer lithium iron manganese phosphate, nanometer lithium iron phosphate-carbon composite, nanometer lithium manganese phosphate-carbon composite, or nanometer lithium iron manganese phosphate-carbon composite; and/or the second active material is selected from at least one of lithium iron phosphate, lithium manganese phosphate, lithium iron manganese phosphate, lithium iron phosphate-carbon composite, lithium manganese phosphate-carbon composite, or lithium iron manganese phosphate-carbon composite.

In some examples, the carbon content of the first active material is greater than the carbon content of the second active material.

In some examples, the carbon content of the first active material is greater than or equal to 1.5 wt%, optionally 1.5 wt%-2.7 wt%, preferably 1.6 wt%-2.2 wt%, further preferably 1.8 wt%-2.0 wt%; and/or the carbon content of the second active material is less than 1.5 wt%.

In some examples, the Dᵥ50 of the first active material satisfies: Dᵥ50≤300 nm, preferably 100 nm≤Dᵥ50≤200 nm, further preferably 100 nm≤Dᵥ50≤150 nm; and/or the Dᵥ50 of the second active material satisfies: Dᵥ50≥800 nm, preferably 800 nm≤Dᵥ50≤1200 nm, further preferably 1000 nm≤Dᵥ50≤1100 nm.

In some examples, the specific surface area of the first active material satisfies: BET≥15 m²/g, optionally 15 m²/g≤BET≤20 m²/g, preferably 18 m²/g≤BET≤20 m²/g; and/or the specific surface area of the second active material satisfies: BET<10 m²/g, optionally 8 m²/g≤BET≤10 m²/g.

In some examples, the electrode plate is a negative electrode plate, the first active material is selected from at least one of natural graphite, hard carbon, nanometer silicon-based material, nanometer tin-based material, or nanometer lithium titanate; and/or the second active material is selected from at least one of artificial graphite, soft carbon, silicon-based material, tin-based material, or lithium titanate.

In some examples, the carbon content of the first active material is greater than or equal to 1.5 wt%, optionally 1.5 wt%-2.0 wt%; and/or the carbon content of the second active material is greater than or equal to 0.9 wt%, optionally 0.9 wt%-1.3 wt%.

In some examples, the Dᵥ50 of the first active material satisfies: 800 nm≤Dᵥ50≤1400 nm; and/or the Dᵥ50 of the second active material satisfies: 100 nm≤Dᵥ50≤400 nm.

In some examples, the specific surface area of the first active material satisfies: BET≥15 m²/g, optionally 15 m²/g≤BET≤20 m²/g; and/or the specific surface area of the second active material satisfies: BET≥7 m²/g, optionally 7 m²/g≤BET≤12 m²/g.

In a second aspect, a battery cell is provided, comprising the electrode plate in any one example in the first aspect.

In a third aspect, a battery is provided, comprising the battery cell in the second aspect.

In a fourth aspect, an electrical apparatus is provided, comprising at least one of the battery cell in the second aspect or the battery in the third aspect, the battery cell and/or the battery being configured to power the electrical apparatus.

### Description of Drawings

To more clearly describe the technical solutions of the examples of the present application, the drawings to be used in the examples of the present application will be briefly introduced below. Apparently, the drawings described below are merely some examples of the present application. For those of ordinary skills in the art, other drawings may also be obtained based on these drawings without making creative work. In the drawings, the figures are not drawn to the actual scale.
Fig. 1 is a schematic structural diagram of an electrode plate in an example of the present application.
Fig. 2 is a schematic top view of an electrode plate in an example of the present application.
Fig. 3 is a schematic structural diagram of an electrode assembly in an example of the present application.
Fig. 4 is a diagram of cycling performance of a battery in Example 1 of the present application.
Fig. 5 is a diagram of cycling performance of a battery in Comparative Example 1 of the present application.
Fig. 6 is a diagram of a DCR test result in Example 1 of the present application.
Fig. 7 is a diagram of a DCR test result in Comparative Example 1 of the present application.

### Detailed Description

Embodiments of a negative electrode current collector, a secondary battery comprising the same, a battery module, and an electrical apparatus of the present application are specifically disclosed below by referring to the detailed description of drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

In the description of the present application, it should be noted that, unless otherwise stated, the "plurality of" means two or more; and the directions or position relationships indicated by the terms, such as "above," "below," "left," "right," "inner," and "outer," are only provided to facilitate describing the present application and simplifying the description, rather than indicating or implying that the apparatus or element referred to must have a specific direction, or be constructed and operated in a specific direction, and therefore cannot be construed as limiting the present application. In addition, the terms "first", "second" and "third" are only used for descriptive purposes, and cannot be construed as indicating or implying relative importance. "Vertical" does not mean being vertical in the strict sense, but within the permissible range of error. "Parallel" does not mean being parallel in the strict sense, but within the permissible range of error.

Orientation words appearing in the following description are all directions shown in the drawings, and do not limit the specific structure of the present application. In the description of the present application, it should also be noted that, unless otherwise expressly specified and defined, the terms "install", "connected" and "connect" should be understood in a broad sense, for example, they may be fixedly connected, detachably connected or integrally connected; and they may be directly connected or indirectly connected through an intermediate medium. For those of ordinary skills in the art, the specific meanings of the above terms in the present application may be understood according to specific circumstances.

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Unless otherwise specifically stated, all the embodiments and optional embodiments of the present application can be combined with one another to form new technical solutions.

Unless otherwise specifically stated, all the technical features and optional technical features of the present application can be combined with one another to form new technical solutions.

In the present application, the battery refers to a physical module including one or more battery cells to provide electric energy. For example, the battery mentioned in the present application may include, e.g., a battery module or a battery pack. The battery generally comprises a box body configured to encapsulate one or more battery cells. The box body can prevent liquid or other foreign matters from affecting charging or discharging of the battery cell.

The battery generally comprises a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate, to prevent positive and negative electrodes from short-circuiting while enabling ions to pass through.

Optionally, the battery may include, e.g., a lithium-ion battery, a sodium-ion battery, or a magnesium-ion battery, which is not limited in examples of the present application.

The present application takes a lithium-ion battery as an example, which is a typical secondary battery, and is also known as a rocking chair battery because it is charged and discharged relying on chemical reactions of deintercalation of lithium ions as active ions between the positive and negative electrodes. During charging of the lithium-ion battery, the lithium ions are deintercalated from the positive electrode, move, and are intercalated into the negative electrode; while during discharging, the lithium ions are deintercalated from the negative electrode, move, and are intercalated into the positive electrode.

During processing of the battery, the positive electrode plate, the negative electrode plate, and the separator are usually assembled into an electrode assembly, and then the electrode assembly is arranged in a case accommodating the electrode assembly and an electrolyte to form the battery cell. The electrode assembly may have a winded structure or a stacked structure.

The winded electrode assembly is prepared by separating a continuous long sheet-shaped positive electrode plate and the negative electrode plate with the separator, and then winding the resulting assembly. The stacked electrode assembly is prepared mainly by stacking the positive electrode plates and the negative electrode plates alternately in sequence, which are stacked, winded, and separated by the separators in a Z shape therebetween.

The positive electrode plate comprises a positive electrode current collector and a positive electrode film layer. The positive electrode film layer is coated on at least one surface of the positive electrode current collector. A current collector that is not coated with positive electrode film layer protrudes from the current collector that is coated with the positive electrode film layer, to serve as a positive electrode tab. The negative electrode plate comprises a negative electrode current collector and a negative electrode film layer. The negative electrode film layer is coated on at least one surface of the negative electrode current collector. A current collector that is not coated with the negative electrode film layer protrudes from the current collector that is coated with the negative electrode film layer, to serve as a negative electrode tab. Considering that the electrode plates need to be winded or stacked during subsequent processing, in order to maintain the integrity of the tabs and avoid mechanical damages to the tabs, the positive electrode film layer and the negative electrode film layer usually will be thinned at edges of the coated regions close to the respective tabs during coating, so that the positive electrode film layer and the negative electrode film layer have smaller thicknesses at the edges close to the tabs than at the normal coated regions.

During charging and discharging of the lithium-ion battery, factors such as internal resistance changes of the lithium-ion battery, balance between electrochemical reaction rates and electron motion rates of the positive and negative electrodes, and diffusion rates of lithium ions involved in electrochemical reactions will all cause polarization of the battery, so that active ions (lithium ions) precipitate from the surface of the negative electrode plate, that is, lithium plating occurs. The occurrence of the polarization and lithium plating phenomena of the battery will greatly affect the cycling performance and service life of the battery, and even may further cause serious battery safety problems. The positive electrode film layer and the negative electrode film layer have small thicknesses at the thinned edges, so that there is a large spacing between the positive electrode plate and the negative electrode plate at the edges, the battery polarization phenomenon is more prominent at the edges, and lithium plating is more likely to occur at the edges.

In view of this, an example of the present application provides an electrode plate, a battery cell, a battery, and an electrical apparatus, where the electrode plate is provided with a first active material having a large specific surface area in a thinned region, and is provided with a second active material having a small specific surface area in a non-thinned region. Therefore, the electrode plate can accommodate more electrolyte in the thinned region, and can effectively ameliorate the lithium plating phenomenon in the thinned region of the electrode plate during battery cycling, thereby improving the cycling performance and service life of the battery.

It should be understood that the "lithiation" and "intercalation" process in the present application refer to a process in which lithium ions are intercalated in a positive electrode material and a negative electrode material due to electrochemical reactions, and the "deintercalation" and "delithiation" process in the present application refers to a process in which lithium ions are deintercalated from the positive electrode material and the negative electrode material due to electrochemical reactions.

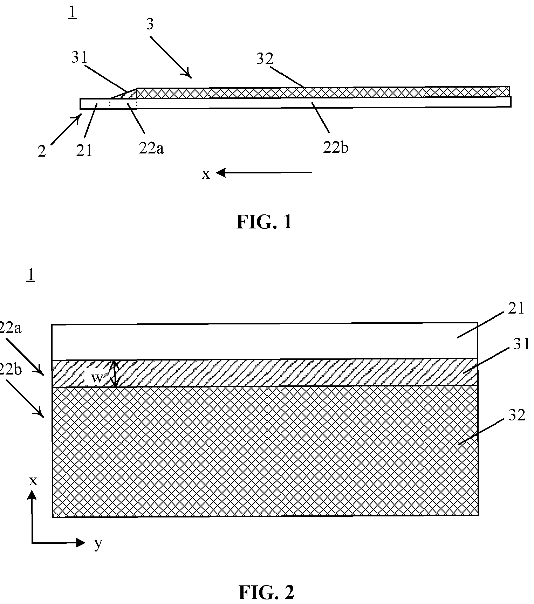

First, the present application provides an electrode plate. Fig. 1 is a schematic structural diagram of an electrode plate in an example of the present application. Fig. 2 is a schematic top view of an electrode plate in an example of the present application.

As shown in Fig. 1 and Fig. 2, the electrode plate 1 comprises a current collector 2 and a film layer 3. The current collector 2 comprises a tab region 21, a thinned region 22a, and a non-thinned region 22b, where the thinned region 22a is located between the non-thinned region 22b and the tab region 21.

The film layer 3 is arranged on the thinned region 22a and the non-thinned region 22b. The film layer 3 comprises a first active material 31 and a second active material 32, where the thickness of the film layer 3 of the thinned region 22a is smaller than the thickness of the film layer 3 of the non-thinned region 22b. A first active material 31 is arranged on the thinned region 22a, and a second active material 32 is arranged on the non-thinned region 22b. The specific surface area of the first active material 31 is larger than the specific surface area of the second active material 32.

Specifically, the film layer 3 is arranged on at least one surface of the current collector 2. The electrode plate 1 may be a positive electrode plate, or may be a negative electrode plate. The electrode plate 1 may be used to form a winded electrode assembly, or may be used to form a stacked electrode assembly. The first active material 31 is arranged on the thinned region 22a, while the second active material 32 is arranged on the non-thinned region 22b. That is, the thickness of the first active material 31 on the thinned region 22a is smaller than the thickness of the second active material 32 on the non-thinned region 22b.

In the winded electrode assembly, the tab region 21 is connected to one side of the thinned region 22a along a first direction x. During subsequent assembling, the electrode plate 1 is winded along a second direction y to form a winded electrode assembly. The first direction x is a direction perpendicular to a long side of the electrode plate 1, and the second direction y is a direction parallel to the long side of the electrode plate 1. In the stacked electrode assembly, the tab region 21 may be connected to one side of the thinned region 22a along the first direction x, or may be connected to one side of the thinned region 22a along the second direction y. During subsequent assembling, the electrode plates 1 are stacked alternately in sequence, and are stacked and winded by the separators in a Z shape therebetween to form a stacked electrode assembly.

In the electrode plate 1 of this example, the first active material 31 is arranged on the thinned region 22a, and the second active material 32 is arranged on the non-thinned region 22b, so that the electrode plate can absorb and accommodate more electrolyte, particularly liquid electrolyte, in the thinned region 22a. Therefore, during battery cycling, a diffusion rate of lithium ions in the thinned region 22a can be effectively increased, and lithium ion kinematics can be improved, thereby effectively ameliorating the polarization phenomenon in the thinned region 22a, reducing the occurrence of lithium plating, and helping to improve the cycling performance and service life of the battery.

It should be understood that the first active material 31 and the second active material 32 may be active materials of a same type. In order words, the first active material 31 and the second active material 32 may be active materials of a same type, but have different specific surface areas. For example, the first active material 31 is nanometer lithium iron phosphate, and the second active material 32 is lithium iron phosphate. The first active material 31 and the second active material 32 may be active materials of different types. In order words, the first active material 31 and the second active material 32 may be active materials of different types, and have different specific surface areas. For example, the first active material 31 is nanometer lithium iron manganese phosphate, and the second active material 32 is lithium iron phosphate.

In an example, the Dᵥ50 of the first active material 31 is greater than the Dᵥ50 of the second active material 32.

Specifically, the D_{V}50 refers to a corresponding particle size when a cumulated volume particle size distribution percentage of an active material reaches 50%, and represents an average particle size of the active material. A material with a smaller particle size usually has a larger specific surface area. Therefore, a material with a larger D_{V}50 may be selected as the second active material 32, and an active material with a smaller D_{V}50 may be selected as the first active material 31, so that the specific surface area of the first active material 31 is larger than the specific surface area of the second active material 32.

In this example, the average particle size of the first active material 31 is controlled to be smaller than the average particle size of the second active material 32, so that the specific surface area of the first active material 31 is larger than the specific surface area of the second active material 32, and there are also more gaps between the particles of the first active material 31, thereby further accommodating more electrolyte solution, helping to further ameliorate the lithium plating problem caused by polarization of the thinned region 22a during the battery cycling, and further improving the cycling performance and service life of the battery.

In an example, the compaction density of the film layer 3 in the thinned region 22a is smaller than the compaction density of the film layer 3 in the non-thinned region 22b.

Specifically, during preparation of the electrode plate 1, the active material is coated on the current collector, and after the active material dries, the electrode plate will be cold pressed according to a certain pressure. In this case, pressures on the cold pressed thinned region 22a and the non-thinned region 22b may be controlled to be different, so that the compaction density of the film layer 3 in the thinned region 22a is smaller than the compaction density of the film layer 3 in the non-thinned region 22b. Therefore, the film layer 3 can have a relatively loose structure in the thinned region 22a.

In a more specific example, the compaction density of the film layer 3 in the thinned region 22a is 1.9 g/cm³-2.3 g/cm³, preferably 2.0 g/cm³-2.2 g/cm³; and the compaction density of the film layer 3 in the non-thinned region is greater than 2.4 g/cm³.

In this example, the film layer 3 is controlled to have a smaller compaction density in the thinned region 22a, so that the film layer 3 has a relatively loose structure in the thinned region 22a, and the first active material 31 arranged in the thinned region 22a can further accommodate more electrolyte solution during the battery cycling, thereby further ameliorating the lithium plating of the electrode plate 1 in the thinned region 22a, and improving the cycling performance and service life of the battery.

In an example, the film layer 3 has a thickness of 40 µm-300 µm in the thinned region 22a.

Specifically, referring to Fig. 1, the thickness of the film layer 3 in the thinned region 22a satisfies: 40 µm≤d≤300 µm. Wherein d may be 40 µm, 50 µm, 60 µm, 70 µm, 80 µm, 90 µm, 100 µm, 120 µm, 140 µm, 160 µm, 180 µm, 200 µm, 220 µm, 240 µm, 260 µm, 280 µm, or 300 µm, or its value is within a range obtained by a combination of any two of the above values. The thickness of the film layer 3 in the thinned region 22a may be a fixed value, or may gradually decrease along the first direction x. The thickness of the film layer 3 in the thinned region 22a in the present application refers to the thickness of the film layer 3 at any position in the thinned region 22a of the film layer 3.

In an example, the length of the thinned region 22a in the first direction x satisfies: 0 mm<w≤15 mm, and the first direction is the width direction of the electrode plate.

Specifically, referring to Fig. 2, the width w of the thinned region 22a satisfies 0 mm<w≤15 mm. Wherein w may be 0.1 mm, 0.2 mm, 0.3 mm, 0.4 mm, 0.5 mm, 0.6 mm, 0.7 mm, 0.8 mm, 0.9 mm, 1 mm, 2 mm, 3 mm, 4 mm, 5 mm, 6 mm, 7 mm, 8 mm, 9 mm, 10 mm, 11 mm, 12 mm, 13 mm, 14 mm, or 15 mm, or its value is within a range obtained by a combination of any two of the above values.

Specific examples in which the electrode plate 1 serves as a positive electrode plate and a negative electrode plate in a battery will be introduced below.

### [Positive electrode plate]

The positive electrode plate comprises a positive electrode current collector and a positive electrode film layer arranged on at least one surface of the positive electrode current collector, and the positive electrode film layer comprises a first active material 31 and a second active material 32. In this case, the first active material 31 and the second active material 32 are each a positive electrode active material.

As an example, the positive electrode current collector has two surfaces opposite in its own thickness direction, and the positive electrode film layer is arranged on either one or both of the two opposite surfaces of the positive electrode current collector.

Optionally, a metal foil or a composite current collector may be used as the positive electrode current collector. For example, an aluminum foil can be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

Optionally, a positive electrode active material for a battery well known in the art may be used as the second active material 32. As an example, the second active material 32 may comprise at least one of the following materials: a lithium-containing phosphate of olivine structure, a lithium transition metal oxide, and a respective modified compound thereof. However, the present application is not limited to these materials, and other conventional materials that can be used as positive electrode active materials for batteries can also be used. These positive electrode active materials may be used alone or in combination of two or more thereof. Examples of lithium transition metal oxides may include, but are not limited to, at least one of a lithium-cobalt oxide (e.g., LiCoO₂), a lithium-nickel oxide (e.g., LiNiO₂), a lithium-manganese oxide (e.g., LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (e.g., LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{o.6}Co_{0.2}Mn_{0.2}O₂ (also abbreviated as NCM622), LiNi_{0.8}Co_{0.1}Mn_{0.1}O₂ (also abbreviated as NCM811), a lithium-nickel-cobalt-aluminum oxide (e.g., LiNi_{0.85}Co_{0.15}Al_{0.05}O₂), a modified compound thereof, and the like. Examples of lithium-containing phosphates of olivine structure may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite.

Optionally, a positive electrode active material for a battery well known in the art may also be used as the first active material 31, as long as the specific surface area of the first active material 31 is larger than the specific surface area of the second active material 32 used in the same electrode plate 1. As an example, the first active material 31 may comprise at least one of the following materials: a nanoscale lithium-containing phosphate of olivine structure, a nanoscale lithium transition metal oxide, and a respective modified compound thereof. Examples of nanoscale lithium transition metal oxides may include, but are not limited to, at least one of nanometer lithium-cobalt oxide, nanometer lithium-nickel oxide, nanometer lithium-manganese oxide, nanometer lithium-nickel-cobalt oxide, nanometer lithium-manganese-cobalt oxide, nanometer lithium-nickel-manganese oxide, nanometer lithium-nickel-cobalt-manganese oxide, nanometer lithium-nickel-cobalt-aluminum oxide, a modified compound thereof, and the like. Examples of nanoscale lithium-containing phosphates of olivine structure may include, but are not limited to, at least one of nanometer lithium iron phosphate, lithium iron phosphate-carbon composite, nanometer lithium manganese phosphate, nanometer lithium manganese phosphate-carbon composite, nanometer lithium iron manganese phosphate, and nanometer lithium iron manganese phosphate-carbon composite. These positive electrode active materials may be used alone or in combination of two or more thereof.

In an example, the Dᵥ50 of the first active material 31 satisfies: Dᵥ50≤300 nm; preferably 100 nm≤Dᵥ50≤200 nm; further preferably 100 nm≤Dᵥ50≤150 nm. The second active material 32 satisfies: Dᵥ50≥800 nm, preferably 800 nm≤Dᵥ50≤1200 nm, further preferably 1000 nm≤Dᵥ50≤1100 nm.

Specifically, the Dᵥ50 of the first active material 31 may be 10 nm, 20 nm, 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, 220 nm, 240 nm, 260 nm, 280 nm, or 300 nm, or its value is within a range obtained by a combination of any two of the above values. The Dᵥ50 of the second active material 32 may be 800 nm, 820 nm, 840 nm, 860 nm, 880 nm, 900 nm, 920 nm, 940 nm, 960 nm, 980 nm, 1000 nm, 1100 nm, or 1200 nm, or its value is within a range obtained by a combination of any two of the above values.

In an example, the specific surface area of the first active material 31 satisfies: BET≥15 m²/g, optionally 15 m²/g≤BET≤20 m²/g, preferably 18 m²/g≤BET≤20 m²/g. The specific surface area of the second active material 32 satisfies: BET≤10 m²/g, optionally 8 m²/g≤BET≤10 m²/g.

Specifically, the BET of the first active material 31 may be 15 m²/g, 16 m²/g, 17 m²/g, 18 m²/g, 19 m²/g, or 20 m²/g, or its value is within a range obtained by a combination of any two of the above values. The BET of the second active material 32 may be 1 m²/g, 2 m²/g, 3 m²/g, 4 m²/g, 5 m²/g, 6 m²/g, 7 m²/g, 8 m²/g, 9 m²/g, or 10 m²/g, or its value is within a range obtained by a combination of any two of the above values.

In an example of the present application, active materials with specific surface areas and average particle sizes within a certain range are selected as the first positive electrode active material and the second positive electrode active material respectively, so as to accurately control the ability of the positive electrode film layer to absorb and accommodate electrolyte in the non-thinned region 22b and the thinned region 22a, further improve the lithium ion kinematics in the thinned region 22a, and ameliorate the lithium plating problem of the battery.

In an example, when the positive electrode active material contains carbon, the carbon content of the first active material 31 is greater than the carbon content of the second active material 32.

In a specific example, the carbon content of the first active material 31 is 1.5%-2.7%, preferably 1.6%-2.2%, and further preferably 1.8%-2.0%. That is, the carbon content of the first active material 31 may be 1.5%, 1.6%, 1.7%, 1.8%, 1.9%, 2.0%, 2.1%, or 2.2%, or its value is within a range obtained by a combination of any two of the above values.

Optionally, the positive electrode film layer further comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

Optionally, the positive electrode film layer further comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by: forming a positive electrode slurry from the above components for preparing a positive electrode plate respectively. For example, the first active material 31, the conductive agent, the binder, and any other components are dispersed in a solvent (e.g., N-methyl pyrrolidone) to form a positive electrode slurry 1. For another example, the second active material 32, the conductive agent, the binder, and any other components are dispersed in a solvent (e.g., N-methyl pyrrolidone) to form a positive electrode slurry 2. Then, the positive electrode slurry is coated on the positive electrode current collector, followed by procedures such as drying and cold pressing, to provide the positive electrode plate.

### [Negative electrode plate]

The negative electrode plate generally comprises a negative electrode current collector and a negative electrode film layer arranged on at least one surface of the negative electrode current collector, and the negative electrode film layer comprises a first active material 31 and a second active material 32. **In** this case, the first active material 31 and the second active material 32 are each a negative electrode active material.

As an example, the negative electrode current collector has two opposite surfaces in its own thickness direction, and the negative electrode film layer is provided on either one or both of the two opposite surfaces of the negative electrode current collector.

Optionally, a metal foil or a composite current collector may be used as the negative electrode current collector. For example, a copper foil can be used as the metal foil. The composite current collector may comprise a polymer material substrate layer and a metal layer formed on at least one surface of the polymer material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

Optionally, a negative electrode active material for a battery well known in the art may be used as the second active material 32. As an example, the second active material 32 may include at least one of the following materials: artificial graphite, soft carbon, a silicon-based material, a tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, the present application is not limited to these materials, and other conventional materials that can be used as negative electrode active materials for batteries can also be used. These negative electrode active materials may be used alone or in a combination of two or more thereof.

Optionally, a negative electrode material for a battery well known in the art may also be used as the first active material 31, as long as the specific surface area of the first active material 31 is larger than the specific surface area of the second active material 32 used in the same electrode plate 1. As an example, the first active material may include at least one of the following materials: natural graphite, hard carbon, a nanometer silicon-based material, a nanometer tin-based material, nanometer lithium titanate, and the like. The nanometer silicon-based material may be selected from at least one of nanoscale elemental silicon, nanoscale silicon-oxygen compound, nanoscale silicon-carbon composite, nanoscale silicon-nitrogen composite, and nanoscale silicon alloy. The nanometer tin-based material may be selected from at least one of nanoscale elemental tin, nanoscale tin-oxygen compound, and nanoscale tin alloy. These negative electrode active materials may be used alone or in a combination of two or more thereof.

Optionally, the specific surface area of the first active material 31 satisfies: BET≥15 m²/g, optionally 15 m²/g≤BET≤20 m²/g, and preferably, the specific surface area of the second active material 31 is 16 m²/g; and/or, the specific surface area of the second active material 32 satisfies: BET≥7 m²/g, optionally 7 m²/g≤BET≤12 m²/g, and preferably, the specific surface area of the second active material 32 is 8 m²/g.

Optionally, the Dv50 of the first active material 31 satisfies: 800 nm≤Dᵥ50≤1400 nm, and optionally, the Dᵥ50 of the first active material 31 is 1000 nm; and/or the Dv50 of the second active material 32 satisfies: 100 nm≤Dᵥ50≤400 nm, and preferably, the Dᵥ50 of the second active material 32 is 200 nm.

Optionally, when the negative electrode active material contains carbon, the carbon content of the first active material 31 is greater than or equal to 1.5 wt%, optionally 1.5 wt%-2.0 wt%, preferably 2.0 wt%; and/or the carbon content of the second active material 32 is greater than or equal to 0.9 wt%, optionally 0.9 wt%-1.3 wt%, preferably 1.2 wt%.

Optionally, the negative electrode film layer further comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

Optionally, in an example, the negative electrode film layer further comprises a conductive agent. The conductive agent may be selected from at least one of superconducting carbon, acetylene black, carbon black, Ketjen black, carbon dot, carbon nanotube, graphene, and carbon nanofiber.

Optionally, the negative electrode film layer further comprises other adjuvants, for example, a thickener (such as sodium carboxymethyl cellulose (CMC-Na)).

In some embodiments, the negative electrode plate may be prepared by: forming a negative electrode slurry from the above components for preparing a negative electrode plate respectively. For example, the first active material 31, the conductive agent, the binder, and any other components are dispersed in a solvent (e.g., N-methyl pyrrolidone) to form a negative electrode slurry 1. For another example, the second active material 32, the conductive agent, the binder, and any other components are dispersed in a solvent (e.g., N-methyl pyrrolidone) to form a negative electrode slurry 2. Then, the negative electrode slurry is coated on the negative electrode current collector, followed by procedures such as drying and cold pressing, to provide the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid state, a gel state, or an all-solid state.

Optionally, an electrolyte solution is used as the electrolyte. The electrolyte solution comprises an electrolyte salt and a solvent.

Optionally, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

Optionally, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

Optionally, the electrolyte solution further comprises an additive. For example, the additive may comprise a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In some embodiments, the secondary battery further comprises a separator. The type of the separator is not particularly limited in the present application, and any well-known separator having good chemical stability, mechanical stability, and a porous structure may be selected.

Optionally, the material of the separator may be selected from at least one of glass fiber, non-woven fabric, polyethylene, polypropylene, and polyvinylidene fluoride. The separator may be a single-layer film, or may be a multi-layer composite film, which is not particularly limited. When the separator is a multilayer composite film, the material in each layer may be same or different, which is not particularly limited.

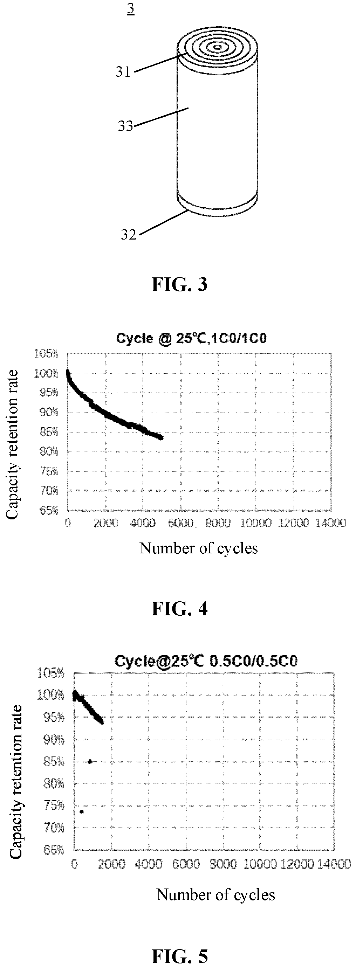

Optionally, the positive electrode plate, the negative electrode plate, and the separator may form an electrode assembly by a winding process or a stacking process. The winded electrode assembly may be a cylinder shape, a square shape, or any other shape. For example, Fig. 3 is a schematic diagram of a cylindrical electrode assembly 3 as an example. As shown in Fig. 3, the tab region 21 of the positive electrode plate is winded to form a positive electrode tab 31 of the electrode assembly 3, and the tab region 21 of the negative electrode plate is winded to form a negative electrode tab 32 of the electrode assembly 3. The thinned regions 22a and the non-thinned regions 22b of the positive electrode plate and the negative electrode plate are winded to form a center part 33 of the electrode assembly.

An example of the present application further provides a battery cell, comprising the electrode plate in any example of the present application.

In some embodiments, the battery cell may comprise an outer package. The outer package may be used to encapsulate the above electrode assembly and the above electrolyte.

In some embodiments, the outer package of the battery cell may be a hard shell, such as a hard plastic shell, an aluminum shell, and a steel shell. The outer package of the battery cell may also be a soft bag, such as a pouch-type soft bag. The material of the soft bag may be a plastic, and examples of the plastic may include polypropylene, polybutylene terephthalate, polybutylene succinate, and the like.

The shape of the battery cell is not particularly limited in the present application, and may be a cylinder shape, a square shape, or any other shape.

An example of the present application further provides a battery, comprising the battery cell in at least one example of the present application.

In some embodiments, first, a plurality of battery cells is integrated into a battery module, and then the battery module is installed in a box body of the battery to form a battery pack. **In** some other production and processing technologies, a plurality of battery cells may also be directly arranged in the box body to form the battery pack, thus removing the intermediate state of the battery module, thereby reducing the mass of the battery pack, and improving the energy density of the battery. A second production and processing technology may also be called an encapsulation technology of battery cell to battery pack (cell to pack), where the battery pack is abbreviated as a battery in the present application.

In some other embodiments, the plurality of battery cells may be directly integrated into a battery module, which is directly used to power an electrical apparatus, and is also abbreviated as a battery in the present application.

In addition, the present application further provides an electrical apparatus, comprising at least one of the battery cell or the battery in any one example of the present application. The battery cell or the battery may be used as a power source of the electrical apparatus, or may be used as an energy storage unit of the electrical apparatus. The electrical apparatus may include, e.g., a vehicle, a mobile phone, a portable device, a laptop, a ship, a spacecraft, an electric toy, and an electric tool. The vehicle may be, but is not limited to, a fuel vehicle, a gas vehicle, or a new energy vehicle, where the new energy vehicle may be, e.g., an all-electric vehicle, a hybrid vehicle, or an extended range electric vehicle; the spacecraft includes, e.g., an airplane, a rocket, a space shuttle, and a spaceship; the electric toy includes a fixed or mobile electric toy, such as a game machine, an electric toy car, an electric toy ship, and an electric toy plane; the electric tool includes an electric metal cutting tool, an electric grinding tool, an electric assembling tool, and an electric tool for railway, such as an electric drill, an electric grinding machine, an electric wrench, an electric screwdriver, an electric hammer, an electric impact drill, a concrete vibrator, and an electric planer.

Here is an electrical apparatus as an example. The electrical apparatus is, e.g., an all-electric vehicle, a hybrid electric vehicle, or a plug-in hybrid electric vehicle. In order to meet the requirements of the electrical apparatus for high power and high energy density of a battery, a battery module or a battery may be used as a power source.

As another example, the apparatus may be a mobile phone, a tablet, a laptop, or the like. The apparatus is generally required to be thin and light, and may use a battery cell as a power source.

Examples of the present application will be described below. The examples described below are illustrative, are merely used to explain the present application, and should not be construed as limiting the present application. Where no specific techniques or conditions are specified in the examples, the techniques or conditions described in literatures of the art or the product manuals are prevailing. Where manufacturers are not specified, the reagents or instruments used are conventional products and are commercially available.

### Example 1

### (1) Preparation of a positive electrode plate

Nanometer lithium iron phosphate (as a first active material 31), a conductive agent acetylene black, and a binder polyvinylidene fluoride (PVDF) at a mass ratio of 97:0.8:2.2 were dissolved in a solvent N-methyl pyrrolidone (NMP). The mixture was sufficiently stirred and fully mixed to obtain a positive electrode slurry 1. Lithium iron phosphate (as a second active material 32), a conductive agent acetylene black, and a binder polyvinylidene fluoride (PVDF) at a mass ratio of 97:0.8:2.2 were dissolved in a solvent N-methyl pyrrolidone (NMP). The mixture was sufficiently stirred and fully mixed to obtain a positive electrode slurry 2. Then, the positive electrode slurry 1 was uniformly coated on a thinned region 22a of a positive electrode current collector aluminum foil, and the positive electrode slurry 2 was uniformly coated on a non-thinned region 22b of the positive electrode current collector aluminum foil, followed by drying, cold pressing, and cutting, to provide the positive electrode plate. In the positive electrode plate, the BET of lithium iron phosphate is 8 m²/g, the BET of nanometer lithium iron phosphate is 16 m²/g, and the length of the thinned region 22a in a first direction is w=10 mm.

### (2) Preparation of a negative electrode plate

Artificial graphite, the conductive agent acetylene black, a binder styrene butadiene rubber (SBR), and a thickener sodium carboxymethyl cellulose (CMC) at a mass ratio of 96.5:0.7:1.8:1 were dissolved in a solvent deionized water. The mixture was sufficiently mixed to obtain a negative electrode slurry. Then, the negative electrode slurry was uniformly coated on a thinned region 22a and a non-thinned region 22b of a negative electrode current collector copper foil, followed by drying, cold pressing, and cutting, to provide the negative electrode plate. The BET of artificial graphite in the negative electrode plate is 2.0 m²/g.

### (3) Assembly of a battery cell

The positive electrode plate, the separator, and the negative electrode plate were sequentially stacked, such that the separator was located between the positive electrode plate and the negative electrode plate, and can separate the positive electrode plate from the negative electrode plate; then the stacked assembly was winded to obtain an electrode assembly; the electrode assembly was arranged in a case, and dried, and then an electrolyte solution of LiPF₆ at a mass fractions of 11% was injected; followed by procedures such as formation and standing, to provide the battery cell.

### Examples 2-3

Compared to the battery cell of Example 1, only the BET and the D_{V}50 of the nanometer lithium iron phosphate were changed in Example 2, where in Example 2, the BET of the nanometer lithium iron phosphate is 18 m²/g, and the D_{V}50 of the nanometer lithium iron phosphate is 600 nm. The specific parameters are detailed in Table 1.

### Example 4

Compared to the battery cell of Example 1, only the length w of the thinned region 22a in the first direction was changed to w=15 mm in Example 3. The specific parameters are detailed in Table 1.

### Example 5

Compared to the battery cell of Example 1, a nanometer lithium iron phosphate-carbon composite was used as the first active material 31, and the lithium iron phosphate-carbon composite was used as the second active material 32 in Example 5, where the carbon content of the first active material was 1.18% and the carbon content of the second active material was 2.01%.

### Example 6

Compared to the battery cell of Example 5, only the carbon content of the nanometer lithium iron phosphate-carbon composite was changed in Example 6. The specific parameters are detailed in Table 1.

### Example 7

### (1) Preparation of a positive electrode plate

Na_{0.85}Ni_{0.25}Mn_{0.75}O₂ with a BET of 1.15 m²/g (as a first active material 31), a conductive agent acetylene black, and a binder polyvinylidene fluoride (PVDF) at a mass ratio of 90:5:5 were dissolved in a solvent N-methyl pyrrolidone (NMP). The mixture was sufficiently stirred and fully mixed to obtain a positive electrode slurry 1. Na_{0.85}Ni_{0.25}Mn_{0.75}O₂ with a BET of 0.8 m²/g (as a second active material 32), the conductive agent acetylene black, and the binder polyvinylidene fluoride (PVDF) at a mass ratio of 90:5:5 were dissolved in a solvent N-methyl pyrrolidone (NMP). The mixture was sufficiently stirred and fully mixed to obtain a positive electrode slurry 2. Then, the positive electrode slurry 1 was uniformly coated on a thinned region 22a of a positive electrode current collector aluminum foil, and the positive electrode slurry 2 was uniformly coated on a non-thinned region 22b of the positive electrode current collector aluminum foil, followed by drying, cold pressing, and cutting, to provide the positive electrode plate.

### (2) Preparation of a negative electrode plate

A negative electrode active material hard carbon, the conductive agent acetylene black, a binder styrene butadiene rubber (SBR), and a thickener sodium carboxymethyl cellulose (CMC) at a mass ratio of 90:4:4:2 were dissolved in a solvent deionized water. The mixture was sufficiently mixed to obtain a negative electrode slurry. The negative electrode slurry was uniformly coated on a thinned region 22a and a non-thinned region 22b of a negative electrode current collector copper foil once or more than once, followed by drying, cold pressing, and cutting, to provide the negative electrode plate. The BET of the hard carbon is 4.5 m²/g.

### (3) Preparation of a battery cell

The battery cell of Example 7 was prepared using the same preparation method as that of Example 1, only except that an electrolyte solution of NaPF₆ at a mass fraction of 11% was used, which was not repeated here.

### Example 8

### (1) Preparation of a positive electrode plate

Lithium iron phosphate, a conductive agent acetylene black, and a binder polyvinylidene fluoride (PVDF) at a mass ratio of 97:0.8:2.2 were dissolved in a solvent N-methyl pyrrolidone (NMP). The mixture was sufficiently stirred and fully mixed to obtain a positive electrode slurry. Then, the positive electrode slurry was uniformly coated on a thinned region 22a and a non-thinned region 22b of a positive electrode current collector aluminum foil, followed by drying, cold pressing, and cutting, to provide the positive electrode plate. The BET of lithium iron phosphate in the positive electrode plate is 8 m²/g.

### (2) Preparation of a negative electrode plate

Natural graphite (as a first active material 31), the conductive agent acetylene black, a binder styrene butadiene rubber (SBR), and a thickener sodium carboxymethyl cellulose (CMC) at a mass ratio of 96.5:0.7:1.8:1 were dissolved in a solvent deionized water. The mixture was sufficiently mixed to obtain a negative electrode slurry 1. Artificial graphite (as a second active material 32), the conductive agent acetylene black, the binder styrene butadiene rubber (SBR), and the thickener sodium carboxymethyl cellulose (CMC) at a mass ratio of 96.5:0.7:1.8:1 were dissolved in a solvent deionized water. The mixture was sufficiently mixed to obtain a negative electrode slurry 2. Then, the negative electrode slurry 1 was uniformly coated on a thinned region 22a of a negative electrode current collector copper foil, and the negative electrode slurry 2 was uniformly coated on a non-thinned region 22b of the negative electrode current collector copper foil, followed by drying, cold pressing, and cutting, to provide the negative electrode plate. The BET of artificial graphite in the negative electrode plate is 3 m²/g, and the BET of natural graphite is 4 m²/g. The length of the thinned region 22a in the first direction is w=10 mm.

### (3) Assembly of a battery cell

The battery cell of Example 8 was prepared using the same preparation method as that of Example 1, which was not repeated here.

### Comparative Example 1

### (1) Preparation of a positive electrode plate

Lithium iron phosphate, a conductive agent acetylene black, and a binder polyvinylidene fluoride (PVDF) at a mass ratio of 97:0.8:2.2 were dissolved in a solvent N-methyl pyrrolidone (NMP). The mixture was sufficiently stirred and fully mixed to obtain a positive electrode slurry. Then, the positive electrode slurry was uniformly coated on a thinned region 22a and a thinned region 22b of a positive electrode current collector aluminum foil, followed by drying, cold pressing, and cutting, to provide the positive electrode plate.

### (2) Preparation of a negative electrode plate

Artificial graphite, the conductive agent acetylene black, a binder styrene butadiene rubber (SBR), and a thickener sodium carboxymethyl cellulose (CMC) at a mass ratio of 96.5:0.7:1.8:1 were dissolved in a solvent deionized water. The mixture was sufficiently mixed to obtain a negative electrode slurry. Then, the negative electrode slurry was uniformly coated on a thinned region 22a and a thinned region 22b of a negative electrode current collector copper foil, followed by drying, cold pressing, and cutting, to provide the negative electrode plate.

### (3) Preparation of a battery cell

The same preparation method was used in Comparative Example 1 as that in Example 1, which was not repeated here.

### Comparative Example 2

### (1) Preparation of a positive electrode plate

A positive electrode active material Na_{0.85}Ni_{0.25}Mn_{0.75}O₂, a conductive agent acetylene black, and a binder polyvinylidene fluoride (PVDF) at a mass ratio of 90:5:5 were dissolved in a solvent N-methyl pyrrolidone (NMP). The mixture was sufficiently stirred and fully mixed to obtain a positive electrode slurry. Then, a negative positive electrode slurry and the positive electrode slurry were uniformly coated on a thinned region 22a and a thinned region 22b of a positive electrode current collector aluminum foil, followed by drying, cold pressing, and cutting, to provide the positive electrode plate.

### (2) Preparation of a negative electrode plate

A negative electrode active material hard carbon, the conductive agent acetylene black, a binder styrene butadiene rubber (SBR), and a thickener sodium carboxymethyl cellulose (CMC) at a mass ratio of 90:4:4:2 were dissolved in a solvent deionized water. The mixture was sufficiently mixed to obtain a negative electrode slurry. Then, the negative electrode slurry was uniformly coated on a thinned region 22a and a thinned region 22b of a negative electrode current collector copper foil, followed by drying, cold pressing, and cutting, to provide the negative electrode plate.

### (3) Preparation of a battery cell

The battery cell was prepared using the same method and steps in Comparative Example 2 as those in Example 7, which were not repeated here.

The product parameters in different examples are detailed in Table 1.

**Table 1: Product parameters in comparative examples and different examples**

| Examples | Battery system | Active material 1 | Active material 2 | BET-1 (m²/g) | BET-2 (m²/g) | Dv5 0-1 (nm) | Dv50-2 (nm) | C-1 (%) | C-2 (%) | w (mm ) |
|---|---|---|---|---|---|---|---|---|---|---|
| 1 | Lithium ions | Nanometer lithium iron phosphate | Lithium iron phosphate | 16 | 8 | 200 | 1000 | \ | \ | 10 |
| 2 | Lithium ions | Nanometer lithium iron phosphate | Lithium iron phosphate | 18 | 8 | 120 | 1000 | \ | \ | 10 |
| 3 | Lithium ions | Nanometer lithium iron phosphate | Lithium iron phosphate | 13 | 8 | 300 | 1000 | \ | \ | 10 |
| 4 | Lithium ions | Nanometer lithium iron phosphate | Lithium iron phosphate | 16 | 8 | 200 | 1000 | \ | \ | 15 |
| 5 | Lithium ions | Nanometer lithium iron phosphate+carbon | Lithium iron phosphate+carbon | 16 | 8 | 200 | 1000 | 1.08 % | 2.01 % | 10 |
| 6 | Lithium ions | Nanometer lithium iron phosphate+carbon | Lithium iron phosphate+carbon | 16 | 8 | 200 | 1000 | 2% | 1.11 % | 10 |
| 7 | Sodium ions | Sodium nickel manganese oxide | Sodium nickel manganese oxide | 1.15 | 0.8 | \ | \ | \ | \ | 10 |
| 8 | Lithium ions | Natural graphite | Artificial graphite | 3 | 4 | 600 0 | 8000 | \ | \ | 10 |
| Comparative Example 1 | Lithium ions | Lithium iron phosphate | Lithium iron phosphate | 8 | 8 | 100 0 | 1000 | \ | \ | 10 |
| Comparative Example 2 | Sodium ions | Sodium nickel manganese oxide | Sodium nickel manganese oxide | 0.8 | 0.8 | \ | \ | \ | \ | 10 |

In Table 1, the active material 1 refers to the first active material 31, the BET-1 refers to the specific surface area of the first active material 31; the active material 2 refers to the second active material 32, the BET-2 refers to the specific surface area of the second active material 32; the Dv50-1 refers to the particle size distribution of the first active material 31, the Dv50-2 refers to the particle size distribution of the second active material 32; the C-1 refers to the carbon content of the first active material 31, the C-2 refers to the carbon content of the second active material 32, and w refers to the length of the thinned region 22a in the first direction.

Performance test results of the batteries in the above Examples 1-5 and Comparative Example 1 are detailed in Table 2.

**Table 2: Cycle life test results in comparative examples and different examples**

| Examples | Cycle life (cycles) @80%SOH |
|---|---|
| 1 | 6000 |
| 2 | 7000 |
| 3 | 5400 |
| 4 | 6800 |
| 5 | 5500 |
| 6 | 6200 |
| 7 | 5100 |
| 8 | 5502 |
| Comparative Example 1 | 4500 |
| Comparative Example 2 | 3996 |

As can be seen from Examples 1-6, Example 8, and Comparative Example 1, no matter whether nanometer lithium iron phosphate is arranged in the thinned region of the positive electrode of the battery or natural graphite is arranged in the thinned region of the negative electrode of the battery, an active material with a larger specific surface area is arranged in the thinned region than in the non-thinned region to effectively improve the cycling performance and service life of the lithium-ion battery. As can be seen from Example 7 and Comparative Example 2, arrangement of an active material with a relatively large specific surface area in the thinned region can also improve the cycling performance and cycle life of the sodium-ion battery.

Then, the parameter test processes of the above batteries are briefly introduced.

### 1. BET test

The standard GB/T19587-2004 (Determination of the specific surface area of solids by gas adsorption using the BET method) was referred to for the test method.

8-15 g of a to-be-tested sample was loaded into a sample tube, and the initial mass of the to-be-tested sample was recorded. The weighed to-be-tested sample was loaded into a device NOVA2000e. Then, degassing was started, and the to-be-tested sample was heated to 200°C, and kept for 2 h. Then, the mass of the degassed to-be-tested sample was recorded. Then, the degassed to-be-tested sample was reloaded into the device, into which liquid nitrogen was poured for BET test. The nitrogen pressure was set to be 0.08 MPa-0.12 MPa, and the heating temperature was set to be 40°C-350°C. After the test was complete, the specific surface area was read from the test results.

### 2. Battery performance test

At 25°C, each of the secondary batteries prepared in the examples and the comparative examples was charged to a cut-off voltage of 3.65V at a constant current rate of 1 C, then charged to a current of less than or equal to 0.05 C at a constant voltage, left to stand for 5 min, then discharged to a discharge cut-off voltage of 2.5V at a constant current rate of 1 C, and left to stand for 5 min, which were one charge and discharge cycle. The battery was repeatedly charged and discharged following this method until the battery capacity was attenuated to 80%. The number of cycles at this moment was denoted as the cycle life of the battery. The test result is as shown in Table 2. Cycling performance test results of the batteries in Example 1 and Comparative Example 1 are shown in Fig. 4 and Fig 5 respectively. As can be seen from Fig. 4 and Fig. 5, the capacity reduction rate of Example 1 is obviously less than that of Comparative Example 1, and the cycle life of Comparative Example 1 will be obviously longer than the cycle life of Comparative Example 1 according to the trend of the curve (as shown by the arrow in the figure).

### 3. DCR test

The battery was taken to perform charge and discharge tests. The battery was first fully charged at 25°C, then laid aside for 30 min, then discharged at a discharging rate of 1 C for 30 min, adjusted to 50% SOC, and laid aside for 10 min. The thermostat was adjusted to a temperature of -20°C-10°C, and laid aside for 120 min, to measure the initial discharge voltage. Then, the battery was discharged at a discharge rate of 3 C for 10 s, a lowest voltage during the discharging was recorded, and then the battery was laid aside for 10 min. A DCR was obtained by dividing a difference between the initial discharge voltage at 3 C and a lowest voltage during the discharging at 3 C by the current value (discharging rate: 3 C, current: 78 A).

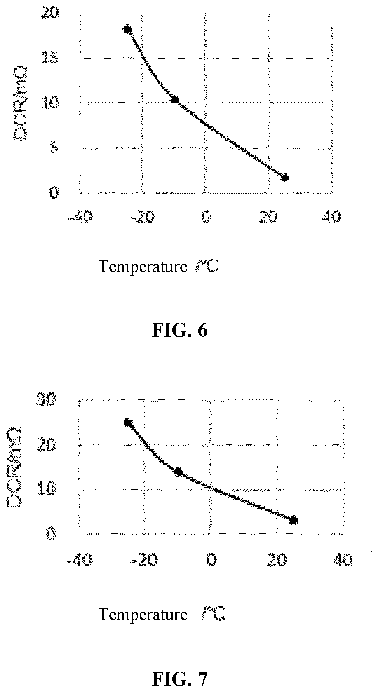

DCR test results in Comparative Example 1 and Example 1 are shown in Fig. 6 and Fig 7, respectively. As can be seen from Fig. 6 and Fig. 7, compared to Example 1, in Comparative Example 1, the DCR decreased by 6.87 mΩ at -25°C; the DCR decreased by 3.46 mΩ at -10°C, and the DCR decreased by 1.42 mΩ at 25°C; the internal resistance was obviously reduced, and the kinematics was obviously improved.

It should be noted that the present application is not limited to the above embodiments. The above embodiments are examples only, and any embodiment that has substantially the same constitutions and has the same effects as the technical ideas within the scope of the technical solutions of the present application is encompassed within the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. An electrode plate, comprising:
a current collector comprising a tab region, a thinned region, and a non-thinned region, the thinned region being located between the non-thinned region and the tab region; and
a film layer arranged on the thinned region and the non-thinned region, wherein the film layer comprises a first active material arranged on the thinned region and a second active material arranged on the non-thinned region, a thickness of the film layer of the thinned region is smaller than a thickness of the film layer of the non-thinned region, and a specific surface area of the first active material is larger than a specific surface area of the second active material.

2. The electrode plate according to claim 1, wherein a Dᵥ50 of the first active material is greater than a Dᵥ50 of the second active material.

3. The electrode plate according to claim 1 or 2, wherein a compaction density of the film layer in the thinned region is smaller than a compaction density of the film layer in the non-thinned region.

4. The electrode plate according to any one of claims 1-3, wherein the film layer has a thickness of 40 µm-300 µm in the thinned region.

5. The electrode plate according to any one of claims 1-4, wherein a length of the thinned region in a first direction satisfies: 0 mm<w≤15 mm, and the first direction is a width direction of the electrode plate.

6. The electrode plate according to any one of claims 1-5, wherein the electrode plate is a positive electrode plate, the first active material is selected from at least one of nanometer lithium iron phosphate, nanometer lithium manganese phosphate, nanometer lithium iron manganese phosphate, nanometer lithium iron phosphate-carbon composite, nanometer lithium manganese phosphate-carbon composite, or nanometer lithium iron manganese phosphate-carbon composite; and/or
the second active material is selected from at least one of lithium iron phosphate, lithium manganese phosphate, lithium iron manganese phosphate, lithium iron phosphate-carbon composite, lithium manganese phosphate-carbon composite, or lithium iron manganese phosphate-carbon composite.

7. The electrode plate according to any one of claims 1-6, wherein a carbon content of the first active material is greater than a carbon content of the second active material.

8. The electrode plate according to claim 7, wherein the carbon content of the first active material is greater than or equal to 1.5 wt%, optionally 1.5 wt%-2.7 wt%, preferably 1.6 wt%-2.2 wt%, further preferably 1.8 wt%-2.0 wt%; and/or
the carbon content of the second active material is less than 1.5 wt%.

9. The electrode plate according to any one of claims 1-8, wherein the Dᵥ50 of the first active material satisfies: Dᵥ50≤300 nm, preferably 100 nm≤Dᵥ50≤200 nm, further preferably 100 nm≤Dᵥ50≤150 nm; and/or,
the Dᵥ50 of the second active material satisfies: Dᵥ50≥800 nm, preferably 800 nm≤Dᵥ50≤1200 nm, further preferably 1000 nm≤Dᵥ50≤1100 nm.

10. The electrode plate according to any one of claims 1-9, wherein the specific surface area of the first active material satisfies: BET≥15 m²/g, optionally 15 m²/g≤BET≤20 m²/g, preferably 18 m²/g≤BET≤20 m²/g; and/or,
the specific surface area of the second active material satisfies: BET≤10 m²/g, optionally 8 m²/g≤BET≤10 m²/g.

11. The electrode plate according to any one of claims 1-5, wherein the electrode plate is a negative electrode plate, the first active material is selected from at least one of natural graphite, hard carbon, nanometer silicon-based material, nanometer tin-based material, or nanometer lithium titanate; and/or,
the second active material is selected from at least one of artificial graphite, soft carbon, silicon-based material, tin-based material, or lithium titanate.

12. The electrode plate according to claim 11, wherein a carbon content of the first active material is greater than or equal to 1.5 wt%, optionally 1.5 wt%-2.0 wt%; and/or,
a carbon content of the second active material is greater than or equal to 0.9 wt%, optionally 0.9 wt%-1.3 wt%.

13. The electrode plate according to any one of claims 1-12, wherein the Dᵥ50 of the first active material satisfies: 800 nm≤Dᵥ50≤1400 nm; and/or,
the Dᵥ50 of the second active material satisfies: 100 nm≤Dᵥ50≤400 nm.

14. The electrode plate according to any one of claims 1-13, wherein the specific surface area of the first active material satisfies: BET≥15 m²/g, optionally 15 m²/g≤BET≤20 m²/g; and/or,
the specific surface area of the second active material satisfies: BET≥7 m²/g, optionally 7 m²/g≤BET≤12 m²/g.

15. A battery cell, comprising the electrode plate according to any one of claims 1-14.

16. A battery, comprising at least one of the battery cells according to claim 15.

17. An electrical apparatus, comprising at least one of the battery cell according to claim 15 or the battery according to claim 16, the battery cell and/or the battery being configured to power the electrical apparatus.
